(19) **Europäisches Patentamt / European Patent Office / Office européen des brevets**

(11) **EP 4 674 885 A1**

(12) **EUROPEAN PATENT APPLICATION**
published in accordance with Art. 153(4) EPC

(43) Date of publication:
07.01.2026 Bulletin 2026/02

(21) Application number: 24763898.4

(22) Date of filing: 27.02.2024

(51) International Patent Classification (IPC):
$C08G\ 63/00^{(2006.01)}$    $C09J\ 7/38^{(2018.01)}$
$C09J\ 11/06^{(2006.01)}$    $C09J\ 167/02^{(2006.01)}$

(52) Cooperative Patent Classification (CPC):
C08G 63/00; C09J 7/38; C09J 11/06; C09J 167/02

(86) International application number:
PCT/JP2024/007004

(87) International publication number:
WO 2024/181419 (06.09.2024 Gazette 2024/36)

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
GE KH MA MD TN

(30) Priority: 27.02.2023 JP 2023027936

(71) Applicant: Mitsubishi Chemical Corporation
Tokyo 100-8251 (JP)

(72) Inventors:
- YAMAGISHI Taiga
  Tokyo 100-8251 (JP)
- SAKAMOTO Kento
  Tokyo 100-8251 (JP)

(74) Representative: Hoffmann Eitle
Patent- und Rechtsanwälte PartmbB
Arabellastraße 30
81925 München (DE)

(54) **POLYESTER, PRESSURE-SENSITIVE ADHESIVE AGENT COMPOSITION, PRESSURE-SENSITIVE ADHESIVE AGENT, PRESSURE-SENSITIVE ADHESIVE TAPE, AND PRESSURE-SENSITIVE ADHESIVE TAPE FOR ELECTRONIC MEMBERS**

(57) To provide a polyester for use in an adhesive composition having excellent easy moisture-heat peelability in the form of a thin film, adhesive strength, holding strength, and solution stability, and highly effective in reducing environmental impact with excellent biomass degree, recyclability, and biodegradability. A polyester has a structural unit derived from polycarboxylic acids (a) and a structural unit derived from polyalcohols (b), wherein the polycarboxylic acids (a) contain aliphatic polycarboxylic acids (a1) having 4 or less carbon atoms, and a structural unit derived from the aliphatic polycarboxylic acids (a1) is in an amount of 50 moles or more in 100 moles of the structural unit derived from polycarboxylic acids (a). The polyester has a crystal fusion heat of 30 J/g or less or contains a structural unit derived from 1,4-butanediol in an amount of less than 50 moles in 100 moles of the structural unit derived from polyalcohols (b).

EP 4 674 885 A1

**Description**

TECHNICAL FIELD

The present disclosure relates to a polyester, an adhesive composition containing a polyester, an adhesive, an adhesive tape, and an adhesive tape for electronic components. More particularly, the present disclosure relates to an adhesive tape and an adhesive tape for electronic components, which are thin and highly effective in reducing environmental impact and are suitably used in bonding sections of housings or components of portable electronic terminals.

BACKGROUND ART

Adhesive tapes can affix substrates or components together without the need for heat or other energy and thus are used as bonding means with excellent workability and high adhesive reliability in the applications for fixing components and the like in various industrial fields, such as office automation devices and home appliances. Concurrently with development of various advanced functionalities, these office automation devices are becoming smaller and thinner. There is a strong demand for smaller and thinner devices, particularly in personal computers, digital video cameras, and portable electronic terminals such as electronic organizers, portable phones, PHS phones, smart phones, game consoles, and electronic books. In such portable electronic terminals and the like, there is a need for reducing the thickness of not only main constituent members but also adhesive tape used to fix these members.

Adhesive tape is widely used for fixing and labeling main constituent members (for example, metal or plastic members) of office automation devices and portable electronic terminals. However, conventional adhesive tape is difficult to peel off and disassemble and is often discarded as noncombustible waste without being separated and recycled.

**In** response to recent environmental issues, there is a need for an adhesive tape suitable for separation and recycling that can be easily disassembled and peeled off when discarded, as well as an adhesive used for such a tape.

As a transparent and thin double-sided adhesive tape which is suitable for fixing components of portable terminals such as portable telephones and thin film displays, or for bonding substrates in optical disks, and for fixing polarizing plates, and exhibits excellent adhesive strength and holding strength, for example, **PTL** 1 proposes a double coated pressure sensitive adhesive tape including a core material and pressure sensitive adhesive layers on both faces of the core material, the pressure sensitive adhesive layers being made of an adhesive composition including an acrylic ester-based copolymer having a weight-average molecular weight of 700,000 or greater and a content of a butyl acrylate unit of 90% by mass or greater, and a specific amount of a tackifier, wherein a thickness of the entire tape is 30 $\mu$m or smaller, and a thickness of the pressure sensitive adhesive layer on each face is 2 to 10 $\mu$m.

Furthermore, for example, PTL 2 proposes an adhesive having excellent adhesiveness and heat resistance using a polyester including an aromatic dicarboxylic acid, a glycol having a hydrocarbon in a side chain, and a trivalent or higher-valent polyalcohol and/or a trivalent or higher-valent polycarboxylic acid as essential components, the polyester being made by polycondensing a specific amount of the polyalcohol and/or the polycarboxylic acid. The adhesive containing the polyester exhibits sufficient adhesive strength with a pressure at such a level as finger pressure, has excellent adhesiveness and mechanical strength, especially excellent heat resistance, and can be applied in a wide range of applications.

RELATED ART DOCUMENT

PATENT DOCUMENT

PTL 1: JP-A-2007-169327
PTL 2: JP-A-2007-099879
PTL 3: JP-A-2022-079443

SUMMARY

PROBLEMS TO BE SOLVED BY THE DISCLOSURE

However, in the technologies disclosed in the above PTLs 1 and 2, the thin film does not have sufficient adhesive strength to various adherends, and there is a need for further improvement. Furthermore, the acrylic adhesive of the technology disclosed in the above PTL 1 generally has low elastic modulus and low cohesive strength, and a thin-film adhesive layer made of the adhesive tends to leave adhesive residue when peeled off. There is a need for further improvement.

Polyester adhesives have also been examined as an adhesive with high elastic modulus and high cohesive strength (the glue is less likely to crack and leave adhesive residue when peeled off). However, the technology disclosed in the above **PTL** 2 does not disclose the use of a thin film of the polyester adhesive. **In** addition, when a thin film is made, the thin film sometimes does not exhibit sufficient adhesive strength, and there is a need for further improvement.

Conventionally, acrylic adhesives have been widely used, but in recent years, polyester adhesives have also been increasingly used. Compared with acrylic adhesives, polyester adhesives have higher heat resistance and therefore are superior for use in electronic components and the like. **In** addition, polyester adhesives have good compatibility with ester films such as polyethylene terephthalate (PET) and therefore can often be used even in areas where acrylic adhesives are difficult to use. **In** recent years, measures to deal with environmental burdens have been called for. Polyester adhesives can be returned to oligomers or monomers by depolymerization when discarded and can be more environmentally friendly than acrylic adhesives in consideration of recycling.

A thin-film adhesive sheet using a specific polyester has been proposed as in **PTL** 3, but there is room for improvement in terms of adhesive strength and holding strength. Furthermore, the biomass degree, biodegradability, and recyclability are not considered in the adhesive sheet of **PTL** 3, and there is a problem to be solved in terms of environmental burdens.

MEANS FOR SOLVING THE PROBLEMS

It is generally known that when a polyester is used in an adhesive composition, increasing the ester bond concentration of the polyester improves adhesion to an adherend and increases adhesive strength.

However, if the ester bond concentration is too high, the molecular weight between ester bonds becomes too small and the glass transition temperature of the polyester becomes too high, which in turn impairs adhesion or develops crystallinity to impair solution stability, biodegradability, and recyclability.

Therefore, it is difficult to lower the glass transition temperature while increasing the ester bond concentration, and it has been difficult to obtain a polyester adhesive composition that achieves high adhesive strength, solution stability, biodegradability, and recyclability at the same time.

The inventors of the present disclosure have conducted elaborate studies and have found that a polyester adhesive composition with excellent adhesive strength in the form of a thin film, holding strength, solution stability, and recyclability, and with excellent biomass degree and biodegradability can be obtained by using, as a polyester used for the polyester adhesive composition, a polyester containing a specific amount or more of aliphatic polycarboxylic acids (a1) having 4 or less carbon atoms in a polycarboxylic acid component, and having a crystal fusion heat of 30 J/g or less, or a polyester containing less than 50 moles of a structural unit derived from 1,4-butanediol in 100 moles of a structural unit derived from polyalcohols (b).

Surprisingly, it has also been found that a polyester adhesive composition having easy moisture-heat peelability and excellent recyclability and highly effective in reducing environmental impact can be obtained by using, as a polyester used for the polyester adhesive composition, a polyester containing a specific amount or more of aliphatic polycarboxylic acids (a1) having 4 or less carbon atoms in a polycarboxylic acid component, and having a crystal fusion heat of 30 J/g or less, or a polyester containing less than 50 moles of a structural unit derived from 1,4-butanediol in 100 moles of a structural unit derived from polyalcohols (b).

In a case where the present adhesive composition is used for bonding parts of a product in which multiple parts made of different materials are combined and joined into one unit, assuming recycling, the parts can be easily separated, disassembled and sorted by material during recycling of the product simply by heating the bonded section under high humidity. This is extremely useful for improving the recycling rate.

Specifically, the present disclosure has the following aspects [1] to [16].

[1] A polyester having a structural unit derived from polycarboxylic acids (a) and a structural unit derived from polyalcohols (b), wherein

the polycarboxylic acids (a) contain aliphatic polycarboxylic acids (a1) having 4 or less carbon atoms, a structural unit derived from the aliphatic polycarboxylic acids (a1) having 4 or less carbon atoms is in an amount of 50 moles or more in 100 moles of the structural unit derived from polycarboxylic acids (a), and the polyester has a crystal fusion heat of 30 J/g or less.

[2] A polyester having a structural unit derived from polycarboxylic acids (a) and a structural unit derived from polyalcohols (b), wherein

the polycarboxylic acids (a) contain aliphatic polycarboxylic acids (a1) having 4 or less carbon atoms,

a structural unit derived from the aliphatic polycarboxylic acids (a1) having 4 or less carbon atoms is in an amount of 50 moles or more in 100 moles of the structural unit derived from polycarboxylic acids (a), and

a structural unit derived from 1,4-butanediol is in an amount of less than 50 moles in 100 moles of the structural unit derived from polyalcohols (b).

[3] The polyester according to [1] or [2], wherein the aliphatic polycarboxylic acids (a1) having 4 or less carbon atoms contain a structural unit derived from succinic acid.

[4] The polyester according to any one of [1] to [3], wherein the polyalcohols (b) contain linear aliphatic polyalcohols (b1) having an odd number of carbon atoms.

[5] The polyester according to any one of [1] to [4], wherein the polyalcohols (b) contain linear aliphatic polyalcohols (b1) having an odd number of carbon atoms, and the linear aliphatic polyalcohols (b1) having an odd number of carbon atoms is contained in an amount of 10 moles or more in 100 moles of the structural unit derived from polyalcohols (b).

[6] The polyester according to any one of [1] to [5], wherein the polyalcohols (b) contain linear aliphatic polyalcohols (b1) having an odd number of carbon atoms, and the linear aliphatic polyalcohols (b1) having an odd number of carbon atoms contain a structural unit derived from at least one selected from the group consisting of 1,3-propanediol, 1,5-pentanediol, 1,7-heptanediol, and 1,9-nonanediol.

[7] The polyester according to any one of [1] to [6], wherein the polyalcohols (b) contain side-chain aliphatic diols (b2) having a hydrocarbon group in a side chain.

[8] The polyester according to any one of [1] to [7], wherein the polyalcohols (b) contain linear aliphatic polyalcohols (b1) of polyalcohols having an odd number of carbon atoms, and side-chain aliphatic diols (b2) having a hydrocarbon group in a side chain, and a molar ratio (b1)/(b2) of the linear aliphatic polyalcohols (b1) of polyalcohols having an odd number of carbon atoms to the side-chain aliphatic diols (b2) having a hydrocarbon group in a side chain is 0.5 to 10.0.

[9] The polyester according to any one of [1] to [8], wherein the polyester has an ester bond concentration of 11 to 14 mmol/g.

[10] The polyester according to any one of [1] to [9], wherein the polyester has a biomass degree of 30% or more.

[11] An adhesive composition containing the polyester according to any one of [1] to [10].

[12] An adhesive composition, wherein the adhesive composition according to [11] or [16] has a hydrolysis suppressor, and the hydrolysis suppressor is a monocarbodiimide compound.

[13] An adhesive, wherein the adhesive composition according to [11] or [16] has a crosslinking agent, the adhesive is made by crosslinking by the crosslinking agent, and the adhesive has a gel fraction of 5 to 60%.

[14] An adhesive tape containing the adhesive according to [13].

[15] An adhesive tape for electronic components, the adhesive tape containing the adhesive according to [13].

[16] An adhesive composition containing a polyester having a structural unit derived from polycarboxylic acids (a) and a structural unit derived from polyalcohols (b), wherein

the polycarboxylic acids (a) contain aliphatic polycarboxylic acids (a1) having 4 or less carbon atoms, and a structural unit derived from the aliphatic polycarboxylic acids (a1) having 4 or less carbon atoms is in an amount of 50 moles or more in 100 moles of the structural unit derived from polycarboxylic acids (a).

## EFFECTS OF THE DISCLOSURE

The adhesive composition using the polyester of the present disclosure is excellent in easy moisture-heat peelability, adhesive strength, and holding strength, and especially has excellent adhesive strength when made into a thin film. In addition, the adhesive composition is excellent in biomass degree and also excellent in solution stability, recyclability, and biodegradability.

The adhesive composition of the present disclosure is therefore suitable for adhesives for single-sided or double-sided adhesive tapes for bonding optical components, and single-sided or double-sided adhesive tapes for fixing components of portable electronic terminals and for fixing electronic components.

## EMBODIMENTS OF THE DISCLOSURE

A detailed description of configurations of the present disclosure below provides exemplary preferred embodiments.

In the present description, "s" appended after a compound name is a concept that encompasses not only the compound but also derivatives of the compound. For example, "carboxylic acids" include not only carboxylic acid but also carboxylic acid derivatives such as carboxylic acid salts, carboxylic acid anhydrides, carboxylic acid halides, and carboxylic acid esters.

Further, the expression "X and/or Y" (X and Y are each a given configuration) is intended to mean at least one of X and Y and mean the following three meanings: only X; only Y; and X and Y.

Furthermore, in the present description, "tape" has a meaning including "film" and "sheet."

A polyester according to an embodiment of the present disclosure has a structural unit derived from polycarboxylic acids (a) and a structural unit derived from polyalcohols (b), wherein the polycarboxylic acids (a) contain aliphatic polycarboxylic acids (a1) having 4 or less carbon atoms, and a structural unit derived from the aliphatic polycarboxylic acids (a1) having 4 or less carbon atoms is in an amount of 50 moles or more in 100 moles of the structural unit derived from polycarboxylic acids (a). The polyester has a crystal fusion heat of 30 J/g or less or contains a structural unit derived from 1,4-butanediol in an amount of less than 50 moles in 100 moles of the structural unit derived from polyalcohols (b).

The adhesive according to an embodiment of the present disclosure is an adhesive made by crosslinking an adhesive composition containing the polyester and a crosslinking agent (B), and the adhesive has a gel fraction of 5 to 60%.

Each component that constitutes the polyester and the adhesive composition according to an embodiment of the present disclosure (hereinafter referred to as "the present embodiment") will be described below.

<Polyester>

The polyester used in the present embodiment has a structural unit derived from polycarboxylic acids (a) and a structural unit derived from polyalcohols (b). The structural unit derived from polycarboxylic acids (a) includes a structural unit derived from aliphatic polycarboxylic acids (a1) having 4 or less carbon atoms in an amount of 50 moles or more, preferably 60 moles or more, more preferably 70 moles or more, particularly preferably 80 moles or more, 85 moles or more, especially preferably 90 moles or more, and most preferably 95 moles or more, relative to 100 moles of the structural unit derived from polycarboxylic acids (a).

The upper limit is usually 100 moles or less. An adhesive layer of the present embodiment contains the polyester containing a specific amount of the structural unit derived from aliphatic polycarboxylic acids (a1) having 4 or less carbon atoms, and thus has excellent adhesive strength to various adherends even when it is a thin film, and also has excellent biodegradability and recyclability.

The polyester used in the present embodiment has a structural unit derived from polycarboxylic acids (a) and a structural unit derived from polyalcohols (b).

[Structural Unit Derived From Polycarboxylic Acids (a)]

The polyester is characterized by containing, as the structural unit derived from the polycarboxylic acids (a), 50 moles or more of a structural unit derived from aliphatic dicarboxylic acids (a1) having 4 or less carbon atoms (including carbon atoms of a carboxy group) in the total polycarboxylic acids (a), relative to 100 moles of the structural unit derived from polycarboxylic acids (a).

(Structural Unit Derived From Aliphatic Polycarboxylic Acids (a1) Having 4 Or Less Carbon Atoms)

Examples of the structural unit derived from aliphatic polycarboxylic acids (a1) having 4 or less carbon atoms include structural units derived from linear aliphatic dicarboxylic acids such as succinic acid, oxalic acid, malonic acid, and diglycolic acid; structural units derived from aliphatic dicarboxylic acids having an alkyl group in a side chain such as methylmalonic acid; and structural units derived from unsaturated group-containing aliphatic dicarboxylic acids such as fumaric acid and maleic acid. Among these, the structural units derived from linear aliphatic dicarboxylic acids are preferred. These may be used alone or in combination of two or more. Among these, a structural unit derived from succinic acid is preferred in terms of excellent adhesive strength to various adherends, the ability to increase the biomass degree, and excellent biodegradability and recyclability.

It is also preferable that the structural unit derived from aliphatic polycarboxylic acids (a1) having 4 or less carbon atoms is a structural unit derived from succinic acid, in terms of excellent adhesive strength even in the form of a thin film to various adherends, and excellent biodegradability and recyclability.

The content of the structural unit derived from aliphatic polycarboxylic acids (a1) having 4 or less carbon atoms is usually 50 moles or more, preferably 60 moles or more, more preferably 70 moles or more, particularly preferably 80 moles or more, more particularly preferably 85 moles or more, especially preferably 90 moles or more, and most preferably 95 moles or more, relative to 100 moles of the structural unit derived from polycarboxylic acids (a). The upper limit of the content of the structural unit derived from aliphatic polycarboxylic acids (a1) having 4 or less carbon atoms is usually 100 moles or less. When the content of the structural unit derived from aliphatic polycarboxylic acids (a1) having 4 or less carbon atoms is higher than the above value, adhesive strength to various adherends tends to be excellent, and biodegradability and recyclability tend to be excellent.

(Structural Unit Derived From Other Polycarboxylic Acids)

In addition to the structural unit derived from aliphatic polycarboxylic acids (a1) having 4 or less carbon atoms, the polyester may contain, as the structural unit derived from polycarboxylic acids (a), structural units derived from other polycarboxylic acids, such as polycarboxylic acids having 5 or more carbon atoms, aromatic dicarboxylic acids, and trivalent or higher-valent polycarboxylic acids. These may be used alone or in combination of two or more.

Examples of the structural unit derived from polycarboxylic acids having 5 or more carbon atoms include structural units derived from aliphatic dicarboxylic acids such as glutaric acid, adipic acid, trimethyladipic acid, pimelic acid, suberic acid, azelaic acid, sebacic acid, thiodipropionic acid, and 1,9-nonanedicarboxylic acid; structural units derived from alicyclic dicarboxylic acids such as 1,3-cyclopentanedicarboxylic acid, 1,2-cyclohexanedicarboxylic acid, 1,3-cyclohexanedicarboxylic acid, 1,4-cyclohexanedicarboxylic acid, 2,5-norbornanedicarboxylic acid, and adamantanedicarboxylic acid; and structural units derived from dimer acids derived by dimerization of unsaturated aliphatic acids such as oleic acid, linoleic acid, linolenic acid, and erucic acid.

The content of the structural unit derived from polycarboxylic acids having 5 or more carbon atoms is usually 50 moles or less, preferably 40 moles or less, more preferably 30 moles or less, even more preferably 20 moles or less, particularly preferably 10 moles or less, and especially preferably 5 moles or less, relative to 100 moles of the structural unit derived from polycarboxylic acids (a). The lower limit is usually 0 moles or more. **If** the content of the structural unit derived from polycarboxylic acids having 5 or more carbon atoms is too high, thin film adhesive strength, biodegradability, and recyclability tend to decrease.

Examples of the structural unit derived from aromatic dicarboxylic acids include structural units derived from aromatic dicarboxylic acids such as phthalic acid, terephthalic acid, isophthalic acid, benzylmalonic acid, diphenic acid, 4,4'-oxydibenzoic acid, and naphthalene dicarboxylic acids such as 1,8-naphthalene dicarboxylic acid, 2,3-naphthalene dicarboxylic acid, and 2,7-naphthalene dicarboxylic acid.

Examples of the structural unit derived from trivalent or higher-valent polycarboxylic acids include structural units derived from trimellitic acid, pyromellitic acid, adamantane tricarboxylic acid, and trimesic acid.

Among the structural units derived from polycarboxylic acids having 5 or more carbon atoms, a structural unit derived from aromatic dicarboxylic acids, in particular, a structural unit derived from asymmetric aromatic dicarboxylic acids, is preferred in order to reduce the crystallinity of the polyester.

Examples of the structural unit derived from asymmetric aromatic dicarboxylic acids include structural units derived from phthalic acid, isophthalic acid, 1,8-naphthalenedicarboxylic acid, and 2,3-naphthalenedicarboxylic acid. Among these, the structural unit derived from isophthalic acid is particularly preferred in terms of reactivity and adhesive strength.

The content of the structural unit derived from aromatic dicarboxylic acids, in particular, the structural unit derived from asymmetric aromatic dicarboxylic acids, is usually 50 moles or less, preferably 40 moles or less, more preferably 30 moles or less, even more preferably 25 moles or less, particularly preferably 20 moles or less, especially preferably 15 moles or less, and most preferably 5 moles or less, relative to 100 moles of the structural unit derived from polycarboxylic acids (a). The lower limit is usually 0 moles. **If** the content of the structural unit derived from aromatic dicarboxylic acids is too high, initial adhesiveness, tackiness, thin film adhesive strength, biodegradability, and recyclability tend to decrease.

[Structural Unit Derived From Polyalcohols (b)]

Examples of the structural unit derived from polyalcohols (b) of the polyester include structural units derived from divalent alcohols and structural units derived from trivalent or higher-valent polyols. These may be used alone or in combination of two or more. Among these, in the present embodiment, it is preferable that the polyester contains a structural unit derived from divalent alcohols having an odd number of carbon atoms. **If** polyalcohols with an odd number of carbon atoms rather than an even number are used, the structure of the polyester becomes irregular and the polyester becomes softer, which has the effect of disrupting crystallinity, resulting in good adhesiveness.

(Structural Unit Derived From Divalent Alcohols)

Examples of the structural unit derived from divalent alcohols include structural units derived from aliphatic diols such as ethylene glycol, diethylene glycol, triethylene glycol, propylene glycol, dipropylene glycol, 1,3-propanediol, 2,4-dimethyl-2-ethylhexane-1,3-diol, 2-methyl-1,3-propanediol, 2,2-dimethyl-1,3-propanediol (neopentyl glycol), 2-ethyl-2-butyl-1,3-propanediol, 2-ethyl-2-isobutyl-1,3-propanediol, 1,3-butanediol, 1,4-butanediol, 1,5-pentanediol, 1,6-hexanediol, 3-methyl-1,5-pentanediol, 2,2,4-trimethyl-1,6-hexanediol, and dimer diols derived by dimerization of unsaturated aliphatic acid such as oleic acid and erucic acid;

structural units derived from alicyclic diols such as 1,2-cyclohexanedimethanol, 1,3-cyclohexanedimethanol, 1,4-cyclohexanedimethanol, spiroglycol, tricyclodecanedimethanol, adamantanediol, and 2,2,4,4-tetramethyl-1,3-cyclobutanediol; and

structural units derived from aromatic diols such as 4,4'-thiodiphenol, 4,4'-methylenediphenol, 4,4'-dihydroxybiphenyl, o-, m-, and p-dihydroxybenzenes, 2,5-naphthalenediol, p-xylenediol, and ethylene oxide adducts and propylene oxide adducts thereof.

Other examples include structural units derived from fatty acid esters derived from castor oil and glycerol monostearate. Among these, it is preferable to contain a structural unit derived from divalent alcohols having an odd number of carbon atoms.

The structural unit derived from aliphatic diols can be distinguished as a structural unit derived from aliphatic diols with a linear structure or a structural unit derived from aliphatic diols having a hydrocarbon group in a side chain.

In such a case, the content of the structural unit derived from aliphatic diols with a linear structure is usually 10 to 100 moles, preferably 15 to 98 moles, more preferably 40 to 95 moles, particularly preferably 50 to 90 moles, especially preferably 60 to 85 moles, and most preferably 70 to 80 moles, relative to 100 moles of the structural unit derived from polyalcohols (b). If the content is too low, the glass transition temperature of the polyester tends to increase, resulting in lower adhesive strength, and biodegradability and recyclability tend to decrease. If the content is too high, the polyester tends to crystallize, resulting in lower adhesive strength of the adhesive, and solution stability tends to decrease.

The structural unit derived from aliphatic diols with a linear structure is preferably a structural unit derived from aliphatic diols with a linear structure having 2 to 18 carbon atoms. A structural unit derived from aliphatic diols with a linear structure having 4 or less carbon atoms is particularly preferred in terms of excellent adhesive strength by increasing polarity by increasing the ester bond concentration, and excellent biodegradability and recyclability. Specifically, structural units derived from ethylene glycol, 1,3-propanediol, and 1,4-butanediol are preferred. The structural unit derived from 1,3-propanediol is especially preferred in terms of the ability to disrupt crystallinity while providing excellent adhesive strength and increasing biomass degree.

The structural unit derived from 1,4-butanediol is preferably in an amount of 50 moles or less, more preferably 30 to 0 moles, particularly preferably 15 to 0 moles, especially preferably 5 to 0 moles, and most preferably 0 moles, relative to 100 moles of the structural unit derived from polyalcohols (b).

The polyester included in the adhesive composition of the present embodiment preferably has the structural unit derived from polyalcohols (b), and the structural unit derived from 1,4-butanediol is preferably in an amount of 50 moles or less, more preferably 30 to 0 moles, particularly preferably 15 to 0 moles, especially preferably 5 to 0 moles, and most preferably 0 moles, relative to 100 moles of the structural unit derived from polyalcohols (b).

If the content of the structural unit derived from 1,4-butanediol is too high, the crystallinity increases, which tends to deteriorate easy moisture-heat peelability of a thin film, adhesive strength, holding strength, and solution stability of a polyester adhesive composition.

The content of the structural unit derived from aliphatic diols (b2) having a hydrocarbon group in a side chain is usually 1 to 100 moles, preferably 2 to 70 moles, more preferably 3 to 60 moles, particularly preferably 5 to 50 moles, especially preferably 7 to 40 moles, even more preferably 10 to 35 moles, and most preferably 20 to 30 moles, relative to 100 moles of the structural unit derived from polyalcohols (b). If the content is too low, the polyester tends to crystallize, resulting in lower adhesive strength of the adhesive. If the content is too high, the ester bond concentration of the polyester tends to be low, resulting in lower adhesive strength, and recyclability and solution stability tend to be poor.

Examples of the structural unit derived from aliphatic diols (b2) having a hydrocarbon group in a side chain include structural units derived from dipropylene glycol, 2,4-dimethyl-2-ethylhexane-1,3-diol, 2-methyl-1,3-propanediol, 2,2-dimethyl-1,3-propanediol (neopentyl glycol), 2-methyl-2-ethyl-1,3-propanediol, 2-ethyl-2-butyl-1,3-propanediol, 2-ethyl-2-isobutyl-1,3-propanediol, 1,3-butanediol, 3-methyl-1,5-pentanediol, 2,2,4-trimethyl-1,6-hexanediol, and dimerdiol. Among these, the structural units derived from 2,2-dimethyl-1,3-propanediol (neopentyl glycol) and 2-methyl-1,3-propanediol are preferred.

(Structural Unit Derived From Trivalent Or Higher-Valent Polyols)

In the present embodiment, it is preferable to contain a structural unit derived from trivalent or higher-valent polyols as the structural unit derived from polyalcohols (b) in order to form reaction points with a crosslinking agent (B) described later and to increase cohesive strength.

The content of the structural unit derived from trivalent or higher-valent polyols is usually 20 moles or less, preferably 0.1 to 10 moles, more preferably 0.5 to 5 moles, particularly preferably 0.5 to 3 moles, especially preferably 0.8 to 2.0 moles, and most preferably 1.0 to 1.5, relative to 100 moles of the structural unit derived from polyalcohols (b). If the content of the trivalent or higher-valent polyols is too high, polyester production tends to be difficult.

Examples of the structural unit derived from trivalent or higher-valent polyols include structural units derived from 2-ethyl-2-hydroxymethyl-1,3-propanediol (trimethylolpropane), trimethylolethane, glycerin, pentaerythritol, 1,2,4-butanetriol, 1,2,5-pentanetriol, and 1,2,6-hexanetriol. Among these, it is particularly preferable to contain a structural unit derived from trimethylolpropane because gel is relatively less likely to be formed.

In the present embodiment, it is preferable to select at least one kind of the structural unit derived from linear aliphatic polyalcohols (b1) having an odd number of carbon atoms, as the structural unit derived from the polyalcohols (b), in terms of the ability to decrease the glass transition temperature while disrupting crystallinity, and excellent adhesive strength to various adherends, biodegradability, and recyclability. It is more preferable that the structural unit derived from aliphatic polyalcohols (b1) having an odd number of carbon atoms includes structural units derived from 1,3-propanediol, 1,5-pentanediol, 1,7-heptanediol, and 1,9-nonanediol, as the structural unit derived from polyalcohols (b). It is particularly preferable to include the structural units derived from 1,3-propanediol and 1,5-pentanediol. It is especially preferable to include the structural unit derived from 1,3-propanediol in order to increase the ester bond concentration; provide excellent adhesive strength, biodegradability, and recyclability; and increase biomass degree.

The content of the structural unit derived from at least one selected from the linear aliphatic polyalcohols (b1) having an odd number of carbon atoms is usually 10 to 100 moles, preferably 20 to 98 moles, more preferably 40 to 95 moles, particularly preferably 50 to 90 moles, especially preferably 60 to 85 moles, and most preferably 70 to 80 moles, relative to 100 moles of the structural unit derived from polyalcohols (b). If the content of the linear aliphatic polyalcohols having an odd number of carbons is too low, the glass transition temperature of the polyester tends to increase, resulting in lower adhesive strength of the adhesive. If the content is too high, the polyester tends to crystallize, resulting in lower adhesive strength of the adhesive, and recyclability and solution stability tend to be poor.

In the present embodiment, when the linear aliphatic polyalcohols (b1) of polyalcohols having an odd number of carbons and at least one kind of side-chain aliphatic diols (b2) having a hydrocarbon group in a side chain are contained, the molar ratio (b1)/(b2) of the linear aliphatic polyalcohols (b1) of polyalcohols having an odd number of carbon atoms to the at least one kind of side-chain aliphatic diols (b2) having a hydrocarbon group in a side chain is preferably 0.5 to 10.0, more preferably 0.6 to 8.0, even more preferably 0.8 to 6.0, particularly preferably 1.0 to 5.0, especially preferably 2.0 to 4.5, and most preferably 3.0 to 4.0.

The molar ratio (b1)/(b2) set within the above range is preferable in terms of excellent solution stability and recyclability.

In the present embodiment, the ratio (composition ratio) of the structural unit derived from each component of the polyester can be determined by a known method using NMR, such as 1H-NMR measurement (proton nuclear magnetic resonance spectroscopy) and $^{13}$C-NMR measurement (carbon nuclear magnetic resonance spectroscopy) at a resonance frequency of 400 MHz.

The polyester used in the present embodiment may contain a structural unit derived from a compound having both carboxylic acid and a hydroxyl group in a molecule, in addition to the structural unit derived from polycarboxylic acids (a) and the structural unit derived from polyalcohols (b), to the extent that the effect of the present embodiment is not impaired.

Examples of the structural unit derived from a compound having both carboxylic acid and a hydroxyl group in a molecule include structural units derived from glycolic acid, lactic acid, hydroxybutyric acid, and hydroxyhexanoic acid. Among these, the structural units derived from lactic acid and hydroxybutyric acid are particularly preferred in order to increase the ester bond concentration and provide excellent adhesive strength, biodegradability, and recyclability.

The content of the structural unit derived from a compound having both carboxylic acid and a hydroxyl group in a molecule is preferably 100 moles or less, more preferably 80 moles or less, even more preferably 60 moles or less, particularly preferably 40 moles or less, especially preferably 20 moles or less, and most preferably 10 moles or less, relative to 100 moles of the structural unit derived from polycarboxylic acids (a). The lower limit is usually 0 moles or more. **If** the content of the structural unit derived from a compound having both carboxylic acid and a hydroxyl group in a molecule is too high, the polyester tends to crystallize, resulting in lower adhesive strength, and solution stability tends to be poor. **If** the content is too low, biodegradability tends to be poor.

The polyester used in the present embodiment may contain a structural unit derived from a cyclic ester. Examples of the structural unit derived from a cyclic ester include structural units derived from aliphatic lactone, such as lactide, β-propiolactone, β-butyrolactone, γ-butyrolactone, γ-hexanolactone, γ-octanolactone, δ-valerolactone, δ-hexanolactone, δ-octanolactone, ε-caprolactone, δ-dodecanolactone, α-methyl-γ-butyrolactone, β-methyl-δ-valerolactone, glycolide, and lactide. Among these, the structural unit derived from ε-caprolactone is preferred in order to lower the glass transition temperature and provide excellent adhesive strength and excellent biodegradability. One or two or more of these structural units derived from cyclic ester monomers can be used.

The structural unit derived from a cyclic ester is preferably in an amount of 100 moles or less, more preferably 80 moles or less, particularly preferably 60 moles or less, even more preferably 40 moles or less, especially preferably 20 moles or less, and most preferably 10 moles or less, relative to 100 moles of the structural unit derived from polycarboxylic acids (a). The lower limit is usually 0 moles or more. If the content of the structural unit derived from a cyclic ester is too high, the polyester tends to crystallize, resulting in lower adhesive strength and poor solution stability. If the content is too low, biodegradability tends to be poor.

[Production of Polyester]

The polyester of the present embodiment can be produced by polycondensation reaction using the polycarboxylic acids (a) and the polyalcohols (b) described above as raw materials in the presence of a catalyst by a known method. In other words, the polyester is obtained by polycondensation reaction of the polycarboxylic acids (a) and the polyalcohols (b), and thus has the structural unit derived from polycarboxylic acids (a) and the structural unit derived from polyalcohols (b).

In the polycondensation reaction, esterification reaction or transesterification reaction is performed first, and thereafter polycondensation reaction is performed. If there is no need for a higher molecular weight, the polyester may be produced by esterification reaction or transesterification reaction alone.

The ratio between the polycarboxylic acids (a) and the polyalcohols (b) is preferably 1 to 2 equivalents of the polyalcohols (b), particularly preferably 1.1 to 1.7 equivalents, per equivalent of the polycarboxylic acids (a). If the ratio of the polyalcohols (b) is too low, the acid value tends to be high, making it difficult to achieve a high molecular weight. If the ratio is too high, the yield tends to decrease.

[Esterification Reaction or Transesterification Reaction]

In the esterification reaction or transesterification reaction, a catalyst is usually used. Specifically, examples of the catalyst include catalysts such as titanium catalysts such as tetraisopropyl titanate and tetrabutyl titanate, antimony catalysts such as antimony trioxide, germanium catalysts such as germanium dioxide, and catalysts such as zinc acetate, manganese acetate, and dibutyl tin oxide. One or two or more of these can be used. Among these, antimony trioxide, tetrabutyl titanate, germanium dioxide, and zinc acetate are preferred because of the balance between high catalytic activity and hue of the resulting reaction product.

The amount of the catalyst blended is preferably 1 to 10000 ppm, particularly preferably 10 to 5000 ppm, and even more preferably 20 to 3000 ppm, relative to the total copolymerization components (based on mass). If the blended amount is too small, the polymerization reaction tends not to progress sufficiently. If the blended amount is too large, there is no advantage such as shortened reaction time, and side reactions tend to occur easily.

The reaction temperature during esterification reaction or transesterification reaction is preferably 200 to 300°C, particularly preferably 210 to 280°C, and even more preferably 220 to 260°C. If the reaction temperature is too low, the reaction tends not to progress well, and if too high, side reactions such as decomposition tend to occur easily. The pressure during the reaction is usually normal pressure.

The reaction conditions for the polycondensation reaction performed after the esterification reaction or transesterification reaction are as follows: the same catalyst as the catalyst used in the esterification reaction or transesterification reaction is added in the same amount, and at a reaction temperature of preferably 220 to 280°C, particularly preferably 230 to 270°C, the reaction system is gradually depressurized to a final pressure of 5 hPa or less. If the reaction temperature is too low, the reaction tends not to progress well, and if too high, side reactions such as decomposition tend to occur easily.

The polyester obtained above preferably has an ester bond concentration of 11 to 14 mmol/g, more preferably 11.1 to 13.5 mmol/g, even more preferably 11.2 to 13.0 mmol/g, particularly preferably 11.4 to 12.8 mmol/g, especially preferably 11.6 to 12.6 mmol/g, and most preferably 12.0 to 12.5 mmol/g. If the ester group concentration is too small, the polarity of the polyester is reduced, and thus adhesion, thin film adhesive strength, biodegradability, and recyclability tend to be poor.

The ester bond concentration (mmol/g) is the number of moles of ester bonds in 1 g of polyester, for example, calculated from the amount of raw materials. In the calculation, the smaller one of the moles of the polycarboxylic acids (a) and the moles of the polyalcohols (b) is divided by the total mass of the finished product. Examples of the calculation formula are shown below.

When the polycarboxylic acids (a) and the polyalcohols (b) are fed in the same molar amount, either of the following formulae may be used.

The calculation method is changed as appropriate when a monomer having both carboxylic acid and a hydroxyl group is used or when the polyester is produced from caprolactone or the like.

<When the amount of polycarboxylic acids (a) is smaller>

Ester bond concentration (mmol/g) = $[(A1/\alpha 1 \times m1 + A2/\alpha 2 \times m2 + A3/\alpha 3 \times m3...)/Z] \times 1000$

A: Amount of polycarboxylic acids (a) fed (g)
$\alpha$: Molecular weight of polycarboxylic acids (a)
m: Number of carboxy groups per molecule of polycarboxylic acids (a)
Z: Mass of finished product (g)

<When the amount of polyalcohols (b) is smaller>

Ester group concentration (mmol/g) = [(B1/$\beta$1$\times$n1+B2/$\beta$2$\times$n2+B3/$\beta$3$\times$n3...)/Z] $\times$ 1000

B: Amount of polyalcohols (b) fed (g)
$\beta$: Molecular weight of polyalcohols (b)
n: Number of hydroxyl groups per molecule of polyalcohols (b)
Z: Mass of finished product (g)

The ester bond concentration of the polyester can also be determined by a known method using NMR or the like, such as 1H-NMR measurement (proton nuclear magnetic resonance spectroscopy) or 13C-NMR measurement (carbon nuclear magnetic resonance spectroscopy) at a resonance frequency of 400 MHz.

Examples of a method of adjusting the ester bond concentration to a predetermined range include: a method that selects polyalcohols having 4 or less carbon atoms as the polyalcohols (b); a method that increases the content of linear carboxylic acids having 4 or less carbon atoms as the polycarboxylic acids (a); a method that increases the content of dicarboxylic acids with a smaller carbon number; a method that combines both methods; and a method by which the average number of carbon atoms of the structural unit derived from polycarboxylic acids and the structural unit derived from polyalcohols is 5 or less.

The average number of carbon atoms (including carbon atoms of a carboxy group) of the structural unit derived from polycarboxylic acids and the structural unit derived from polyalcohols of the polyester is preferably 5 or less, more preferably 4.8 or less, particularly preferably 4.6 or less, even more preferably 4.4 or less, especially preferably 4.2 or less, and most preferably 4.0 or less. If the average number of carbon atoms of the structural unit derived from polycarboxylic acids and the structural unit derived from polyalcohols of the polyester is too large, the ester bond concentration of the polyester tends to be low, resulting in lower adhesive strength, and biodegradability tends to be poor. The lower limit of the average number of carbon atoms of the structural unit derived from polycarboxylic acids and the structural unit derived from polyalcohols of the polyester is 2.0.

The polyester preferably has a glass transition temperature (Tg) of -70 to 20°C, particularly preferably -50 to 10°C, even more preferably -40 to 0°C, especially preferably -35 to -5°C, and especially more preferably -30 to -10°C, and most preferably -25 to -15°C. If the glass transition temperature (Tg) is too high, the adhesive strength in the form of a thin film tends to decrease, and if it is too low, heat resistance and cohesive strength tend to decrease.

The glass transition temperature can be adjusted, for example, by introducing an aromatic skeleton or by changing the alkyl chain length of the polycarboxylic acids (a) or the polyalcohols (b).

The glass transition temperature (Tg) is measured using a differential scanning calorimeter DSC Q20 available from TA Instruments. The measurement temperature range is -90 to 100°C, and the temperature rise rate is 10°C/min.

The polyester preferably has a weight average molecular weight of 5000 to 500000, more preferably 10000 to 300000, particularly preferably 20000 to 200000, even more preferably 30000 to 150000, and especially preferably 50000 to 130000. If the weight average molecular weight is too large, ease of handling is reduced and a large amount of solvent is required, which tends to increase environmental burdens. If the weight average molecular weight is too small, adhesiveness tends to decrease.

The weight average molecular weight is a weight average molecular weight in terms of standard polystyrene molecular weight, and is measured by high-performance liquid chromatography ("HLC-8320 GPC" from Tosoh Corporation) using tetrahydrofuran as a solvent and two columns: TSKgel SuperMultipore HZ-M (exclusion limit molecular weight: $2 \times 10^6$, theoretical plate number: 16,000 stages/column, packing material: styrenedivinylbenzene copolymer, particle diameter of packing material: 4 $\mu$m) in series.

The polyester preferably has an acid value of 10 mgKOH/g or less in order to prevent hydrolysis and increase durability, even more preferably 5 mgKOH/g or less, especially preferably 2 mgKOH/g or less, especially preferably 1 mgKOH/g or less, and most preferably 0.5 mgKOH/g or less. If the acid value is too large, durability tends to decrease.

The acid value can be adjusted, for example, by increasing the ratio of the polyalcohols (b) during esterification reaction or transesterification reaction, or by adjusting the reaction conditions. The lower limit of the acid value is usually 0 mgKOH/g.

The acid value of the polyester is determined by neutralization titration based on JIS K0070.

The acid value in the present embodiment means the content of carboxy groups in the polyester. The carboxy groups include those in a carboxylate ionic state in which the carboxy groups are neutralized by a basic compound.

The polyester preferably has a crystal fusion heat of 30 J/g or less as measured by a differential scanning calorimeter (DSC), more preferably 10 J/g or less, even more preferably 5 J/g or less, particularly preferably 2 J/g or less, and especially preferably no crystal fusion heat is produced. If the crystal fusion heat is too large, crystallinity is produced, and the resin solution tends to have poor storage stability, low stability at low temperatures when made into an adhesive tape, and poor adhesive strength when made into a thin film.

Examples of a method of adjusting the crystal fusion heat to a predetermined range include: a method that uses polycarboxylic acid having an alkyl group in a side chain or polyalcohol having an alkyl group in a side chain as appropriate; a method that uses linear aliphatic polycarboxylic acids having an odd number of carbon atoms as appropriate; a method that uses linear aliphatic polyalcohols having an odd number of carbon atoms as appropriate; and a method that uses three or more, preferably four or more copolymerization monomer components.

The crystal fusion heat is energy consumed when a crystallized material is heated and fused, and can be measured by a differential scanning calorimeter (DSC).

Further, it is preferable that the polyester is made from plant-derived raw materials and has a biomass degree in order to reduce the burden on the global environment. The biomass degree is preferably 30% or more, more preferably 50% or more, particularly preferably 60% or more, even more preferably 70% or more, and most preferably 80% or more. The upper limit is usually 100% or less. If the biomass degree is low, reduction of the burden on the global environment tends to be insufficient.

As used herein, the biomass degree of the polyester is the mass percentage of a portion of plant-derived raw materials used in the production of the polyester that is incorporated into the resin, relative to the total mass of the polyester. The biomass degree is calculated by the following method. The biomass degree of polycarboxylic acids and polyol is determined from the weighted average of their respective biomass degrees. It is desirable that the value obtained by one of the following calculation methods is within the above range.

(Calculation Method)

Biomass degree (%) = [(moles of carbon of plant-derived monomers calculated from the molar ratio of polycarboxylic acids and polyols in polyester)/(moles of carbon of all constituent monomers in polyester)] $\times$ 100

The biomass degree can also be determined by analyzing the composition ratio by NMR and calculating the carbon number of plant-derived monomers/the total carbon number.

Furthermore, the biomass degree can also be measured by the method described in "A Speciation of Bio-Fuel by Easy C-14 Measurement" in Tokyo Metropolitan Industrial Technology Research Institute Research Report, No. 4, 2009.

<Adhesive Composition>

The adhesive composition used in the present embodiment preferably contains, in addition to the polyester described above, a crosslinking agent (B), a hydrolysis suppressor (C), a urethanation catalyst (D), and an antioxidant (E).

[Crosslinking agent (B)]

The adhesive composition used in the present embodiment preferably contains a crosslinking agent (B). By including the crosslinking agent (B), the polyester is crosslinked by the crosslinking agent (B) to achieve excellent cohesive strength, and the performance as an adhesive can be further improved.

Examples of the crosslinking agent (B) include crosslinking agents having a functional group that reacts with at least one of a hydroxyl group and a carboxy group included in the polyester, such as isocyanate crosslinking agents and polyepoxy crosslinking agents. Polyfunctional acrylic monomers and urethane acrylate oligomers that increase cohesive strength without reacting with polyester can also be used. Among these, isocyanate crosslinking agents are particularly preferred in order to achieve good balance of initial adhesiveness, mechanical strength, and heat resistance.

Examples of such isocyanate crosslinking agents include polyisocyanates such as tetramethylene diisocyanate, hexamethylene diisocyanate, isophorone diisocyanate, tolylene diisocyanate, diphenylmethane diisocyanate, hydrogenated diphenylmethane diisocyanate, xylylene diisocyanate, hydrogenated xylylene diisocyanate, tetramethyl xylene diisocyanate, 1,5-naphthalene diisocyanate, and triphenylmethane triisocyanate. Other examples include adducts of the above polyisocyanates and polyol compounds such as trimethylolpropane, and biurets and isocyanurates of these polyisocyanate compounds. The polyisocyanate compound can be used even if the isocyanate moiety is blocked by phenol, lactam, or the like. One type of these isocyanate crosslinking agents may be used alone, or two or more types may be used in combination.

In such isocyanate crosslinking agents, aromatic polyisocyanate compounds are preferred, and trifunctional aromatic isocyanate compounds are preferred in terms of good compatibility with polyester.

The content of the crosslinking agent (B) can be used as appropriate according to the molecular weight of the polyester and the intended use. Usually, the crosslinking agent (B) is preferably contained in a ratio of 0.2 to 10 equivalents of reactive group in the crosslinking agent (B) to 1 equivalent of at least one of a hydroxyl group and a carboxy group in the polyester, particularly preferably 0.3 to 5 equivalents, even more preferably 0.5 to 3 equivalents, and especially 0.6 to 1.5 equivalents. If the equivalent number of reactive groups in the crosslinking agent (B) is too small, cohesive strength tends to decrease, and if it is too large, flexibility tends to decrease.

The content of the crosslinking agent (B) is preferably 0.01 to 10 parts by mass, particularly preferably 0.1 to 8 parts by mass, even more preferably 0.5 to 6 parts by mass, especially preferably 0.75 to 4 parts by mass, and most preferably 1 to 3 parts by mass, relative to 100 parts by mass of the polyester. If the content of the crosslinking agent is low, cohesive strength tends to decrease. If the content is too high, flexibility tends to decrease, and necessary adhesive strength tends not to be obtained.

In the reaction of the polyester and the crosslinking agent (B), an organic solvent that does not have functional groups that react with these components can be used. Examples of the organic solvent that can be used include esters such as ethyl acetate and butyl acetate, ketones such as methyl ethyl ketone and methyl isobutyl ketone, and aromatics such as toluene and xylene. These can be used alone or in combination of two or more.

[Hydrolysis Suppressor (C)]

The hydrolysis suppressor (C) is not particularly limited, and a conventionally known one can be used. For example, a compound that reacts with the carboxylic acid terminal group of the polyester to form a bond can be used. Specific examples include compounds having functional groups such as carbodiimide group, epoxy group, and oxazoline group. Among these, a carbodiimide group-containing compound is preferred in that it is highly effective in eliminating the catalytic activity of proton derived from the carboxy terminal group.

As the carbodiimide group-containing compound used in the present embodiment, a known carbodiimide having one or more carbodiimide groups (-N=C=N-) in a molecule can be used. Examples include a monocarbodiimide compound having one carbodiimide group in a molecule, and a polycarbodiimide compound having two or more carbodiimide groups in a molecule. Among these, the monocarbodiimide compound is preferred in terms of a high ester bond concentration, and excellent compatibility with polyester with high polarity, adhesive strength, and recyclability.

The carbodiimide group-containing compound used in the present embodiment is preferably a monocarbodiimide compound. Examples of the monocarbodiimide compound include diphenylcarbodiimide, bis(methylphenyl)carbodiimide, bis(methoxyphenyl)carbodiimide, bis(nitrophenyl)carbodiimide, bis(dimethylphenyl)carbodiimide, bis(diisopropylphenyl)carbodiimide, bis(di-t-butylphenyl)carbodiimide, and bis(triphenylsilyl)carbodiimide. Among these, bis(diisopropylphenyl)carbodiimide is preferred in terms of excellent compatibility with polyester and adhesive strength, and excellent reactivity with carboxy groups and moisture-heat durability.

The carbodiimide group-containing compound used in the present embodiment may be a polycarbodiimide compound in terms of hydrolysis resistance. The weight average molecular weight of the polycarbodiimide compound is preferably 1000 or more, more preferably 2000 or more, and even more preferably 3000 or more. The upper limit of the weight average molecular weight is usually 50000.

The polycarbodiimide compound preferably has lower volatility. For this, it is preferable to use a polycarbodiimide compound having a higher number average molecular weight, usually 300 to 10000, and preferably 1000 to 5000.

If the molecular weight of the polycarbodiimide compound is too small, hydrolysis resistance tends to decrease. **If** the molecular weight is too large, the compatibility with polyester tends to decrease, and adhesive strength tends to be poor.

The carbodiimide equivalent of the carbodiimide group-containing compound is preferably 50 to 10000, particularly preferably 100 to 1000, and even more preferably 150 to 500. The carbodiimide equivalent refers to the chemical formula weight per carbodiimide group.

As the carbodiimide group-containing compound, it is also preferable to use a polycarbodiimide compound produced by decarboxylative condensation reaction of diisocyanate in the presence of a carbodiimidation catalyst.

[Polycarbodiimide Compound]

The polycarbodiimide compound can be obtained by condensation reaction of an organic diisocyanate compound.

Examples of the organic diisocyanate compound include aromatic diisocyanate compounds such as 1,5-naphthylene diisocyanate, 4,4'-diphenylmethane diisocyanate, 4,4'-diphenyl dimethyl methane diisocyanate, 1,3-phenylene diisocyanate, 1,4-phenylene diisocyanate, 2,4-tolylene diisocyanate, 2,6-tolylenediisocyanate, mixtures of 2,4-tolylenediisocyanate and 2,6-tolylenediisocyanate, xylylene diisocyanate, and tetramethylxylylene diisocyanate; and aliphatic diisocyanates such as acyclic aliphatic diisocyanates such as hexamethylene diisocyanate, and cyclic aliphatic diisocyanates such as cyclohexane-1,4-diisocyanate, isophorone diisocyanate, dicyclohexylmethane-4,4'-diisocyanate, methylcyclohexane diisocyanate, and 2,5(2,6)-bis(isocyanatomethyl)bicyclo[2.2.1]heptane. These may be used alone or in combination of two or more.

Among these, the aromatic diisocyanate compounds are preferred, and tetramethylxylene diisocyanate is more preferred, in that an adhesive composition with excellent moisture and heat resistance can be made.

The polycarbodiimide compound can be obtained by decarboxylative condensation reaction of the organic diisocyanate compound using a known carbodiimidation catalyst by an ordinary method.

The polycarbodiimide compound is preferably an aromatic polycarbodiimide compound in that an adhesive that has low haze change even under high-temperature and high-humidity conditions and has excellent moisture and heat resistance can be made.

Furthermore, the polycarbodiimide compound used in the present embodiment is preferably a compound in which at least one of the terminal isocyanate groups of the polycarbodiimide compound is substituted with a substituent derived from a hydrophilic organic compound.

[Compound in which at least one of the terminal isocyanate groups of the polycarbodiimide compound is substituted with a substituent derived from a hydrophilic organic compound]

The compound in which at least one of the terminal isocyanate groups of the polycarbodiimide compound is substituted with a substituent derived from a hydrophilic organic compound will now be described.

First, the hydrophilic organic compound will be explained.

[Hydrophilic Organic Compound]

The hydrophilic organic compound is a compound that has a substituent having active hydrogen having reactivity with the isocyanate group at an end of the polycarbodiimide compound and has one or more heteroatoms in the molecule in addition to the substituent.

Examples of the substituent having active hydrogen having reactivity with the isocyanate group include hydroxyl group, primary amino group, secondary amino group, imino group, isocyanate group, and carboxy group. Among these, hydroxyl group, primary amino group, secondary amino group, and imino group are preferred. These substituents may be used alone or in combination of two or more in the hydrophilic organic compound.

The number of substituents having active hydrogen having reactivity with the isocyanate group is usually two or less and preferably one in the hydrophilic organic compound. The substituent is preferably present at an end of the hydrophilic organic compound.

Examples of the compound that has a substituent having active hydrogen having reactivity with the isocyanate group at an end of the polycarbodiimide compound and has one or more heteroatoms in the molecule in addition to the substituent include oxyalkylene structure-containing compounds, hydroxypolyester structure-containing compounds, hydroxyalkyl sulfonic acid structure-containing compounds, dialkylamino alcohol structure-containing compounds, hydroxycarboxylic acid alkyl ester structure-containing compounds, and dialkylaminoalkylamine structure-containing compounds. Among these, the oxyalkylene structure-containing compounds are preferred.

It is preferable that the end of the hydrophilic organic compound is capped with an alkoxy group or a phenoxy group.

Among these, the hydrophilic organic compound is preferably the oxyalkylene structure-containing compound having an end capped with an alkoxy group or a phenoxy group in terms of excellent compatibility with polyester with a high ester bond concentration.

The oxyalkylene structure-containing compound having an end capped with an alkoxy group or a phenoxy group is, for example, a compound represented by the following formula (1).

$$R^1\text{-O-}(CH_2\text{-}CHR^2\text{-O})m\text{-H} \qquad (1)$$

In the above formula (1), $R^1$ represents an alkyl or phenyl group having 1 to 4 carbon atoms, $R^2$ represents a hydrogen atom or a methyl group, and m is an integer of 4 to 100.

Examples of the alkyl group having 1 to 4 carbon atoms include methyl, ethyl, propyl, isopropyl, n-butyl, s-butyl, isobutyl, and t-butyl groups.

Specific examples of the compound represented by the above formula (1) include polyethylene glycol monomethyl ether, polyethylene glycol monoethyl ether, polypropylene glycol monomethyl ether, polypropylene glycol monoethyl ether, and polypropylene glycol monophenyl ether. Among these, polyethylene glycol monomethyl ether is preferred.

The hydrophilic organic compound preferably has a weight average molecular weight of 200 or more and more preferably 400 or more. The upper limit of the weight average molecular weight is usually 5000 or less, preferably 4000 or less, more preferably 2000 or less, and even more preferably 1000 or less. If the weight average molecular weight is too small, the compatibility with polyester resins tends to decrease, and adhesive strength tends to decrease. If the weight average molecular weight is too large, adhesive strength tends to decrease.

The compound in which at least one of the terminal isocyanate groups of the polycarbodiimide compound is substituted with a substituent derived from a hydrophilic organic compound can be obtained by reacting the polycarbodiimide compound with the hydrophilic organic compound.

The reaction of the polycarbodiimide compound with the hydrophilic organic compound is usually carried out by heating the polycarbodiimide compound to usually 50 to 200°C, preferably 100 to 180°C, then adding the hydrophilic organic compound, and allowing the reaction to further proceed at 80 to 200°C for 0.5 to 5 hours.

In this way, the compound in which at least one of the terminal isocyanate groups of the polycarbodiimide compound is substituted with a substituent derived from the hydrophilic organic compound can be obtained.

Examples of commercially available polycarbodiimide compounds include CARBODILITE (registered trademark) V-09GB, V-02B, V-04K, V-04PF, and V-07 available from Nisshinbo Chemical Inc., and Elastostab H01 available from BASF. Among these, CARBODILITE V-09GB and V-04K are preferred.

As the epoxy group-containing compound, for example, a glycidyl ester compound and a glycidyl ether compound are preferred.

Examples of the glycidyl ester compound include benzoic acid glycidyl ester, t-Bu-benzoic acid glycidyl ester, p-toluic acid glycidyl ester, cyclohexanecarboxylic acid glycidyl ester, pelargonic acid glycidyl ester, stearic acid glycidyl ester, lauric acid glycidyl ester, palmitic acid glycidyl ester, behenic acid glycidyl ester, versatic acid glycidyl ester, oleic acid glycidyl ester, linoleic acid glycidyl ester, linolenic acid glycidyl ester, behenolic acid glycidyl ester, stearolic acid glycidyl ester, terephthalic acid diglycidyl ester, isophthalic acid diglycidyl ester, phthalic acid diglycidyl ester, naphthalenedicarboxylic acid diglycidyl ester, methylterephthalic acid diglycidyl ester, hexahydrophthalic acid diglycidyl ester, tetrahydrophthalic acid diglycidyl ester, cyclohexanedicarboxylic acid diglycidyl ester, adipic acid diglycidyl ester, succinic acid diglycidyl ester, sebacic acid diglycidyl ester, dodecanedioic acid diglycidyl ester, octadecanedicarboxylic acid diglycidyl ester, trimellitic acid triglycidyl ester, and pyromellitic acid tetraglycidyl ester. These can be used alone or in combination of two or more.

Examples of the glycidyl ether compound include phenyl glycidyl ether, o-phenyl glycidyl ether, and bisglycidyl polyethers obtained by the reaction of 1,4-bis($\beta,\gamma$-epoxypropoxy)butane, 1,6-bis($\beta,\gamma$-epoxypropoxy)hexane, 1,4-bis($\beta,\gamma$-epoxypropoxy)benzene, 1-($\beta,\gamma$-epoxypropoxy)-2-ethoxyethane, 1-($\beta,\gamma$-epoxypropoxy)-2-benzyloxyethane, 2,2-bis-[p-($\beta,\gamma$-epoxypropoxy)phenyl]propane, and bisphenol such as 2,2-bis-(4-hydroxyphenyl)propane or 2,2-bis-(4-hydroxyphenyl)methane, with epichlorohydrin. These can be used alone or in combination of two or more.

As the oxazoline group-containing compound, for example, a bisoxazoline compound is preferred. Specifically, examples of the bisoxazoline compound include 2,2'-bis(2-oxazoline), 2,2'-bis(4-methyl-2-oxazoline), 2,2'-bis(4,4-dimethyl-2-oxazoline), 2,2'-bis(4-ethyl-2-oxazoline), 2,2'-bis(4,4'-diethyl-2-oxazoline), 2,2'-bis(4-propyl-2-oxazoline), 2,2'-bis(4-butyl-2-oxazoline), 2,2'-bis(4-hexyl-2-oxazoline), 2,2'-bis(4-phenyl-2-oxazoline), 2,2'-bis(4-cyclohexyl-2-oxazoline), 2,2'-bis(4-benzyl-2-oxazoline), 2,2'-p-phenylenebis(2-oxazoline), 2,2'-m-phenylenebis(2-oxazoline), 2,2'-o-phenylenebis(2-oxazoline), 2,2'-p-phenylenebis(4-methyl-2-oxazoline), 2,2'-p-phenylenebis(4,4-dimethyl-2-oxazoline), 2,2'-m-phenylenebis(4-methyl-2-oxazoline), 2,2'-m-phenylenebis(4,4-dimethyl-2-oxazoline), 2,2'-ethylenebis(2-oxazoline), 2,2'-tetramethylenebis(2-oxazoline), 2,2'-hexamethylenebis(2-oxazoline), 2,2'-octamethylenebis(2-oxazoline), 2,2'-decamethylenebis(2-oxazoline), 2,2'-ethylenebis(4-methyl-2-oxazoline), 2,2'-tetramethylenebis(4,4-dimethyl-2-oxazoline), 2,2'-9,9'-diphenoxyethanebis(2-oxazoline), 2,2'-cyclohexylenebis(2-oxazoline), and 2,2'-diphenylenebis(2-oxazoline). Among these, 2,2'-bis(2-oxazoline) is most preferred in terms of reactivity with polyester.

Furthermore, the bisoxazoline compounds listed above can be used alone or in combination of two or more as long as the object of the present embodiment can be achieved.

As the hydrolysis suppressor (C), those with excellent compatibility with polyester are preferred. For this, those with a low molecular weight are preferably used.

The amount of the hydrolysis suppressor (C) blended is preferably 0.01 to 10 parts by mass, particularly preferably 0.1 to 5 parts by mass, even more preferably 0.2 to 4 parts by mass, especially preferably 0.3 to 3 parts by mass, and most preferably 0.5 to 2 parts by mass, relative to 100 parts by mass of the polyester. If the amount blended is too large, turbidity tends to occur due to poor compatibility with polyester. If the amount blended is too small, it tends to be difficult to obtain sufficient durability.

It is preferable to optimize the amount of the hydrolysis suppressor (C) blended according to the acid value of the polyester. The molar ratio $((\beta)/(\alpha))$ of the total functional group amount $(\beta)$ of the hydrolysis suppressor (C) in the adhesive composition to the total acid value $(\alpha)$ of the polyester in the adhesive composition is preferably $0.5 \leq (\beta)/(\alpha)$, particularly preferably $1 \leq (\beta)/(\alpha) \leq 1000$, even more preferably $1.5 \leq (\beta)/(\alpha) \leq 500$, $2 \leq (\beta)/(\alpha) \leq 250$, $2.5 \leq (\beta)/(\alpha) \leq 100$, and $3 \leq (\beta)/(\alpha) \leq 50$.

If the content ratio of $(\beta)$ to $(\alpha)$ $((\beta)/(\alpha))$ is too high, compatibility with polyester tends to decrease, or adhesive strength, cohesive strength, and durability tend to decrease. If the content ratio of $(\beta)$ to $(\alpha)$ $((\beta)/(\alpha))$ is low, moisture and heat resistance tend to decrease.

[Urethanation Catalyst (D)]

It is more preferable that the adhesive composition used in the present embodiment contains a urethanation catalyst (D) in terms of reaction speed.

Examples of the urethanation catalyst (D) include organometallic compounds and tertiary amine compounds. These can be used alone or in combination of two or more.

Examples of the organometallic compounds include zirconium compounds, iron compounds, tin compounds, titanium compounds, lead compounds, cobalt compounds, and zinc compounds.

Examples of the zirconium compounds include zirconium naphthenate and zirconium acetylacetonate.

Examples of the iron compounds include iron acetylacetonate and iron 2-ethylhexanoate.

Examples of the tin compounds include dibutyltin dichloride, dibutyltin oxide, and dibutyltin dilaurate.

Examples of the titanium compounds include dibutyltitanium dichloride, tetrabutyl titanate, and butoxytitanium trichloride.

Examples of the lead compounds include lead oleate, lead 2-ethylhexanoate, lead benzoate, and lead naphthenate.

Examples of the cobalt compounds include cobalt 2-ethylhexanoate and cobalt benzoate.

Examples of the zinc compounds include zinc naphthenate and zinc 2-ethylhexanoate.

Examples of the tertiary amine compounds include triethylamine, triethylenediamine, and 1,8-diazabicyclo-(5,4,0)-undecene-7.

Among these urethanation catalysts (D), the organometallic compounds are preferred in terms of reaction speed and pot life of the adhesive layer. In particular, the iron compounds, tin compounds, and zirconium compounds are preferred. Furthermore, it is preferable that the urethanation catalyst (D) is used in combination with acetylacetone as a catalytic action suppressor. The inclusion of acetylacetone is preferred in that it suppresses catalytic action at low temperatures and lengthens pot life.

The content of the urethanation catalyst (D) is preferably 0.0001 to 1 part by mass, particularly preferably 0.001 to 0.1 parts by mass, even more preferably 0.01 to 0.05 parts by mass, relative to 100 parts by mass of the polyester. If the content of the urethanation catalyst (D) is too low, the aging time until termination of crosslinking reaction tends to be longer. If the content of the urethanation catalyst (D) is too high, adhesiveness tends to decrease.

[Antioxidant (E)]

It is more preferable that the adhesive composition used in the present embodiment contains the antioxidant (E) in order to increase the stability of the resin.

Examples of the antioxidant (E) include hindered phenol antioxidants, amine antioxidants, sulfur antioxidants, and phosphate antioxidants. Among these, at least one selected from hindered phenol antioxidants, amine antioxidants, and phosphate antioxidants is preferred. In particular, an antioxidant made of a hindered phenolic compound is preferred.

Examples of the hindered phenol antioxidants include an antioxidant having a hindered phenol structure in which a group with large steric hindrance such as a tertiary butyl group is bonded to at least one of adjacent carbon atoms to a carbon atom on an aromatic ring to which the hydroxyl group of phenol is bonded.

The content of the antioxidant (E) is preferably 0.01 to 10 parts by mass, more preferably 0.03 to 8 parts by mass, and even more preferably 0.05 to 5 parts by mass, relative to 100 parts by mass of the polyester. If the content of the antioxidant (E) is too low, adhesive residue on the adherend tends to occur. If the content of the antioxidant (E) is too high, adhesiveness tends to decrease.

In addition to the polyester, the crosslinking agent (B), the hydrolysis suppressor (C), the urethanation catalyst (D), and the antioxidant (E) described above, the adhesive composition of the present embodiment may contain additives such as tackifier resin, softener, UV absorber, stabilizer, and antistatic agent, inorganic or organic filler, powder such as metallic powder and pigment, and particulate additives, to the extent that the effect of the present embodiment is not impaired (for example, 10% by mass or less of the adhesive composition). These can be used alone or in combination of two or more. The adhesive composition of the present embodiment may contain a small amount of impurities and the like contained in raw materials of constituent components of the adhesive composition.

The adhesive composition can be obtained, for example, by preparing the polyester and necessary optional components, and blending and dispersing them during production of the polyester, or by blending them with the polyester and dispersing them using a mixing roller or the like. A solvent may be used for dispersion in a solution, or no solvent may be used for dispersion. It is preferable that the polyester is a main component. As used herein, the main component refers to a component present in an amount of 50% by mass or more, preferably 70% by mass or more, even more preferably 80% by mass or more, and particularly preferably 90% by mass or more. If the content of the polyester is low, heat resistance tends to be poor.

<Adhesive>

The adhesive of the present embodiment is made by crosslinking (curing) the adhesive composition described above. The adhesive can be made into an adhesive layer of an adhesive tape, for example, by applying and drying the adhesive composition. A method for forming the adhesive layer will be described in detail in a method for producing an adhesive tape described later.

The adhesive preferably has a gel fraction of 3% by mass or more in terms of durability and adhesive strength, particularly preferably 5 to 80% by mass, even more preferably 10 to 60% by mass, especially preferably 15 to 50% by mass, and most preferably 20 to 40% by mass. If the gel fraction is too low, holding strength and durability tend to decrease due to reduced cohesive strength. If the gel fraction is too high, there is concern that adhesive strength may decrease due to increased cohesive strength.

The gel fraction is a measure of the degree of crosslinking and is calculated, for example, by the following method. Specifically, an adhesive layer obtained, for example, by applying the adhesive is wrapped with a 200-mesh stainless-steel wire mesh and immersed in toluene at 23°C for 24 hours. The percentage by mass of the undissolved adhesive component remaining in the wire mesh after immersion relative to the mass of the adhesive component before immersion is the gel fraction.

<Adhesive Layer>

The adhesive layer used in the present embodiment has a thickness of 25 $\mu$m or less, preferably 15 $\mu$m or less, more preferably 12 $\mu$m or less, even more preferably 8 $\mu$m or less, and especially preferably 3 $\mu$m or less. The lower limit is usually 0.1 $\mu$m. Generally, the larger the thickness of the adhesive layer, the higher the adhesive strength tends to be, but the adhesive layer used in the present embodiment has excellent adhesive strength to various adherends, although the adhesive layer has a small thickness.

The thickness of the adhesive layer is determined by measurement using a Digimatic Indicator (ID-C112B from Mitutoyo Corporation). In the case of the adhesive tape described later, the thickness of the adhesive layer is determined by subtracting the measured thickness of the constituent members other than the adhesive layer from the measured thickness of the adhesive tape as a whole.

<Adhesive Tape>

The adhesive tape of the present embodiment has the adhesive layer described above.

A first aspect of the adhesive tape of the present embodiment has the adhesive layer and a substrate, in which the substrate is laminated to one side of the adhesive layer and the other side is a tape subjected to release treatment.

A second aspect of the adhesive tape of the present embodiment has the adhesive layer and a tape subjected to release treatment, in which the tape subjected to release treatment is laminated on both sides of the adhesive layer.

In other words, the adhesive tape of the present embodiment may be an adhesive tape having an adhesive layer on one or both sides of a substrate, or may be a substrate-less type of double-sided adhesive tape without a substrate.

The adhesive tape in the first aspect can be produced by a known common method for producing an adhesive tape. For example, the adhesive composition is applied and dried on one side of a substrate to form an adhesive layer, and a surface of the adhesive layer (the opposite side of the surface in contact with the substrate) is bonded with a tape subjected to release treatment, and then cured if necessary.

Alternatively, the adhesive composition is applied and dried on the tape subjected to release treatment to form an adhesive layer, and a surface of the adhesive layer (the opposite side of the surface in contact with the tape subjected to release treatment) is bonded with a substrate, and then cured if necessary.

Examples of the substrate include synthetic resin tapes made of polyester resins such as polyethylene naphthalate, polyethylene terephthalate, polybutylene terephthalate, polyethylene terephthalate/isophthalate copolymer, polybutylene succinate, polybutylene adipate/terephthalate copolymer, hydroxybutyrate/hydroxyhexanoate copolymer, and polycaprolactone; polyolefin resins such as polyethylene, polypropylene, and polymethylpentene; polyfluorinated ethylene resins such as polyvinyl fluoride, polyvinylidene fluoride, and polyethylene fluoride; polyamide such as nylon 6 and nylon 6,6; vinyl polymers such as polyvinyl chloride, polyvinyl chloride/vinyl acetate copolymer, ethylene-vinyl acetate copolymer, ethylene-vinyl alcohol copolymer, polyvinyl alcohol, and vinylon; cellulose resins such as cellulose triacetate and cellophane; acrylic resins such as poly(methyl methacrylate), poly(ethyl methacrylate), poly(ethyl acrylate), and poly(butyl acrylate); polystyrene; polycarbonate; polyarylate; polyimide; and cyclo olefin polymer; metal foil such as aluminum, copper, and iron; paper such as fine paper and glassine paper; woven and non-woven fabrics made of glass fibers, natural fibers, synthetic fibers, and the like. Among these, polyester resin tapes and polyimide resin tapes are preferred, and polyethylene terephthalate is more preferred.

As the tape subjected to release treatment, for example, a tape subjected to release treatment on the substrate may be used. In particular, a silicone release tape is preferred.

The adhesive composition may be applied, for example, using a gravure roll coater, a reverse roll coater, a kiss roll coater, a dip roll coater, a bar coater, a knife coater, a spray coater, a comma coater, or the like.

As the drying conditions after applying the adhesive composition, the drying temperature is preferably 60 to 140°C and particularly preferably 80 to 120°C. The drying time is preferably 0.5 to 30 minutes and particularly preferably 1 to 5 minutes.

As the curing conditions, the temperature is usually room temperature (23°C) to 70°C, and the time is usually 1 to 30 days. Specifically, the curing is performed, for example, at 23°C for 1 to 20 days, preferably at 23°C for 3 to 14 days, at 40°C for 1 to 10 days.

The adhesive tape in the second aspect can also be produced by a known common method for producing an adhesive tape. For example, the adhesive composition is applied and dried on a tape subjected to release treatment to form an adhesive layer, and a surface of the adhesive layer (the opposite side of the surface in contact with the tape subjected to release treatment) is bonded with another tape subjected to release treatment, other than the tape subjected to release treatment, resulting in the adhesive tape in the second aspect. The tape described in the first aspect can be used as the tape subjected to release treatment in the second aspect. The applying method, the drying conditions, and the curing conditions may be similar to those in the first aspect.

In use of the resulting adhesive tape or substrate-less double-sided adhesive tape, the tape subjected to release treatment is peeled off from the adhesive layer, and the adhesive layer is then bonded to an adherend.

The adhesive tape of the present embodiment can be used for bonding various materials and is suitable for single-sided or double-sided adhesive tapes to be used for bonding optical components, and adhesive tapes for electronic components for fixing components of portable electronic terminals and for fixing electronic components. These can be either single-sided or double-sided adhesive tapes.

EXAMPLES

The present embodiment will be described more specifically below using examples. However, it should be understood that the present embodiment is not limited to the following examples within the scope of the present disclosure. In the examples, "parts" and "%" are based on mass.

Polyesters were produced by the following method.

[Example 1: Production of Polyester (A-1)]

In a reaction vessel equipped with a thermometer, a stirrer, a rectifying column, a nitrogen inlet pipe, and a vacuum device, 580.26 parts of succinic acid as polycarboxylic acids (a), 295.42 parts of 1,3-propanediol, and 117.73 parts of neopentyl glycol, 6.59 parts of trimethylolpropane, as polyalcohols (b), and 0.050 parts of tetrabutyl titanate as a catalyst were charged. The temperature was gradually raised to an internal temperature of 250°C, and esterification reaction was carried out over 4 hours. The internal temperature was then raised to 260°C, 0.050 parts of tetrabutyl titanate was charged as a catalyst, the pressure was reduced to 1.33 hPa, and polymerization reaction was carried out over 3 hours to produce a polyester (A-1).

The obtained polyester (A-1) had a composition (molar ratio) of succinic acid/1,3-propanediol/neopentyl glycol/trimethylolpropane = 100/76.7/22.3/1.0, an ester bond concentration of 12.1 mmol/g, a glass transition temperature (Tg) of -26°C, a weight average molecular weight of 115000, an acid value of 0.2 mgKOH/g, and a crystal fusion heat of 0 J/g.

Examples 2 to 4 and Comparative Production Examples 1 to 4 were produced in the same manner as in Example 1, except that the compositions were those in Table 1 below.

The compositions and physical properties of the produced polyesters (A-1) to (A-4) and (A'-1) to (A'-4) are shown in Table 1 below.

The ester bond concentration, glass transition temperature, weight average molecular weight, acid value, and crystal fusion heat of the polyesters, and the gel fraction of the adhesive in the examples and comparative examples were measured according to the methods described above. The biomass degree and the solution stability were calculated or evaluated as follows. These results are listed in Table 1 below.

Although not listed in Table 1, the melting point of Comparative Example 3 was 114°C, and the melting point of Comparative Example 4 was 87°C.

<Biomass Degree>

The biomass degree of the polyesters was calculated using the following formula.

Biomass degree (%) = [(moles of carbon of plant-derived monomers calculated from the molar ratio of polycarboxylic acids and polyols in polyester)/(moles of carbon of all constituent monomers in polyester)] × 100

<Solution Stability>

A solution of polyester diluted in ethyl acetate to a solid concentration of 50% was prepared and allowed to stand at 0°C for 12 hours. The state of the solution was then observed by the naked eye and evaluated based on the following criteria.

(Evaluation Criteria)

(Excellent) The solution is highly transparent.
(Very good) The solution is cloudy.
(Good) The solution has precipitates.
(Bad) The solution solidifies or the polyester does not dissolve.

## Table 1

| | Unit | Polycarboxylic acids (a) | | | | | Polyalcohols (b) | | | | | Molar ratio of b1/b2 | Ester bond concentration (mmol/g) | Biomass degree (%) | Weight average molecular weight (×10⁴) | Acid value (mgKOH/g) | Glass transition temperature (°C) | Crystal fusion heat (J/g) | Solution stability |
|---|---|---|---|---|---|---|---|---|---|---|---|---|---|---|---|---|---|---|---|
| | | SuA (a1) | AdA | SebA | IPA | EG | 1,3PG (b1) | 1,4BG | 1,6HG | NPG (b2) | TMP | | | | | | | | |
| Example 1 (A-1) — Molar ratio | Molar ratio | 100.0 | - | - | - | - | 79.0 | - | - | 23.0 | 1.0 | 3.4 | 12.1 | 84 | 11.5 | 0.2 | -26 | 0 | Excellent |
| Example 1 (A-1) — % by mass | % by mass | 51.0 | - | - | - | - | 34.4 | - | - | 13.8 | 0.8 | | | | | | | | |
| Example 2 (A-2) — Molar ratio | Molar ratio | 100.0 | - | - | - | - | 45.5 | - | - | 53.0 | 1.5 | 0.9 | 11.5 | 66 | 15.2 | 0.2 | -21 | 0 | Excellent |
| Example 2 (A-2) — % by mass | % by mass | 48.3 | - | - | - | - | 19.4 | - | - | 31.1 | 1.1 | | | | | | | | |
| Example (A-3) — Molar ratio | Molar ratio | 80.0 | 20.0 | - | - | - | 68.6 | - | - | 30.4 | 1.0 | 2.3 | 11.6 | 65 | 8.7 | 0.1 | -33 | 0 | Excellent |
| Example (A-3) — % by mass | % by mass | 38.9 | 13.0 | - | - | - | 29.4 | - | - | 18.0 | 0.8 | | | | | | | | |
| Example 4 (A-4) — Molar ratio | Molar ratio | 60.0 | 40.0 | - | - | - | 68.6 | - | - | 30.4 | 1.0 | 2.3 | 11.2 | 53 | 9.2 | 0.1 | -38 | 0 | Excellent |
| Example 4 (A-4) — % by mass | % by mass | 28.3 | 25.1 | - | - | - | 28.5 | - | - | 17.4 | 0.7 | | | | | | | | |
| Comparative Example 1 (A'-1) — Molar ratio | Molar ratio | 47.0 | 47.0 | - | 6.0 | 53.5 | - | - | - | 65.0 | 1.5 | 0.0 | 10.9 | 21 | 8.5 | 0.1 | -28 | 0 | Excellent |
| Comparative Example 1 (A'-1) — % by mass | % by mass | 21.5 | 28.6 | - | 4.3 | 14.4 | - | - | - | 30.2 | 1.1 | | | | | | | | |
| Comparative Example 2 (A'-2) — Molar ratio | Molar ratio | - | - | 80.0 | 20.0 | - | - | 34.0 | 6.2 | 58.6 | 1.3 | 0.0 | 7.7 | 56 | 7.5 | 0.1 | -48 | 0 | Excellent |
| Comparative Example 2 (A'-2) — % by mass | % by mass | - | - | 51.8 | 10.2 | - | - | 11.5 | 2.8 | 23.0 | 0.7 | | | | | | | | |
| Comparative Example 3 (A'-3) — Molar ratio | Molar ratio | 100.0 | - | - | - | - | - | 100.0 | - | - | - | - | 11.6 | 50 | Not dissolve, not measured | Not dissolve, not measured | - | 58 | Bad |
| Comparative Example 3 (A'-3) — % by mass | % by mass | 48.8 | - | - | - | - | - | 51.2 | - | - | - | | | | | | | | |
| Comparative Example 4 (A'-4) — Molar ratio | Molar ratio | 74.0 | 26.0 | - | - | - | - | 100.0 | - | - | - | - | 11.1 | 35 | 13.8 | Not dissolve, not measured | | 34 | Bad |
| Comparative Example 4 (A'-4) — % by mass | % by mass | 34.7 | 16.2 | - | - | - | - | 49.1 | - | - | - | | | | | | | | |

Next, each of the following components was prepared.

[Crosslinking agent (B)]
Isocyanate crosslinking agent: "TAKENATE D101 E" (from Mitsui Chemicals, Inc.)
[Hydrolysis Suppressor (C)]

Carbodiimide compound (C-1): monocarbodiimide compound, "Stabaxol I Powder" (from Rhein Chemie)
Carbodiimide compound (C-2): polyfunctional carbodiimide compound, "CARBODILITE V-09GB" (from Nisshinbo Chemical Inc.)

[Urethanation Catalyst (D)]
Tin compound: dibutyltin dilaurate
[Antioxidant (E)]
Hindered phenol antioxidant: "IRGANOX 1010" (from BASF)

The polyesters (A-1) to (A-4) and (A'-1) to (A'-4) obtained above were used to produce adhesive compositions of examples and comparative examples as follows, and these adhesive compositions were used as adhesive layers to produce adhesive tapes.

[Example 5]

The polyester (A-1) obtained above was diluted in ethyl acetate to a solid concentration of 50%, and to 100 parts of the solid content, 1.4 parts (solid content) of isocyanate crosslinking agent (B-1), 1.0 part (solid content) of carbodiimide compound (C-1), 0.005 parts (solid content) of tin compound (D-1), and 0.1 parts of hindered phenol antioxidant (E-1) were blended, stirred and mixed to obtain an adhesive composition.
The obtained adhesive composition was applied to a polyethylene terephthalate (PET) film (38 μm thick) so that the thickness after drying was approximately 25 μm, and then dried at 120°C for 4 minutes to form an adhesive layer. The adhesive layer was then bonded to a PET tape (release tape) subjected to release treatment to protect the surface, and cured for 7 days in an atmosphere at a temperature of 40°C to obtain an adhesive tape.

[Examples 6 to 8, Comparative Example 5]

An adhesive tape was obtained by producing an adhesive composition in the same manner as in Example 5 except for the formulation as listed in Table 2 below.
The obtained adhesive tapes of the examples and comparative example were evaluated for adhesive strength, moisture-heat durability test, easy moisture-heat peelability, and holding strength as described below. The results are listed in Table 2 below.

<Adhesive Strength (Peel Strength) (N/25mm)>

A bright-annealed stainless-steel (SUS-BA) sheet was prepared as an adherend. The adhesive tapes obtained above were each cut into a 25 mm × 200 mm piece under 23°C and 50%RH. The release film was then stripped, and the adhesive layer side was brought into contact with the SUS-BA sheet and affixed under pressure using a 2 kg roller. After standing under the same atmosphere for 30 minutes, 180° peel strength (N/25mm) was measured using an autograph (Autograph AGS-H 500N from Shimadzu Corporation) at a peel speed of 300 mm/min.
The SUS-BA sheet refers to stainless steel 304 (SUS304) cold-rolled and bright annealed (non-oxidation annealed) or skin pass-rolled to increase glossiness (this is applicable to the present embodiment).

<Moisture-Heat Durability Test (N/25mm)>

The adhesive tape affixed under pressure in the same manner as in the adhesive strength (peel strength) measurement described above was subjected to the following condition (X) or (Y), and then 180° peel strength (N/25mm) was measured in the same manner as the adhesive strength (peel strength) measurement.

Condition (X): allowed to stand for 500 hours at 40°C and 90% RH.
Condition (Y): allowed to stand for 500 hours at 85°C and 85% RH.

<Easy Moisture-Heat Peelability>

The easy moisture-heat peelability was evaluated by applying the value of 180° peel strength (N/25mm) measured in the moisture-heat durability test after being subjected to the condition (X) or (Y) to the following evaluation criteria.

(Evaluation Criteria)

(Very good) The value of condition (X) > 5 N/25mm and the value of condition (Y) < 5 N/25mm.

(Bad) Other than the value of condition (X) > 5 N/25mm and the value of condition (Y) < 5 N/25mm.

<Holding Strength (Cohesive Strength)>

The adhesive tapes of Examples 5 to 8 and Comparative Example 5 obtained above were each affixed to SUS304 as an adherend in accordance with JIS Z-0237, with an affixed area of 25 mm × 25 mm, and then allowed to stand at 80°C for 20 minutes. Under a load of 1 kg, whether the adhesive tape dropped was observed while being allowed to stand for 24 hours, and the evaluation was made based on the following criteria.

(Evaluation Criteria)

(Very good) The adhesive tape did not fall even after being allowed to stand for 24 hours.
(Bad) The adhesive tape fell while being allowed to stand for 24 hours.

Table 2

| | Adhesive composition | | | | | | | Adhesive | Adhesive tape | | | | |
| | Polyester | | Crosslinker (B) | Hydrolysis suppressor (C) | | Urethanation catalyst (D) | Antioxidant (E) | Gel fraction (% by weight) | Adhesive strength (N/25mm) | Moisture-heat durability test (N/25mm) | | Easy moisture-heat peelability | Holding strength |
| | Type | Amount (part) | Amount (part) | Type | Amount (part) | Amount (part) | Amount (part) | | | 40 °C×90% RH (X) | 85°C×85%RH (Y) | | |
| Example 5 | A-1 | 100 | 1.4 | C-1 | 1.0 | 0.005 | 0.1 | 32 | 15 | 44 | 0 | Very good | Very good |
| Example 6 | A-2 | 100 | 1.0 | C-1 | 1.0 | 0.005 | 0.1 | 35 | 16 | 23 | 0 | Very good | Very good |
| Example 7 | A-3 | 100 | 1.25 | C-1 | 1.0 | 0.005 | 0.1 | 36 | 7 | 28 | 1 | Very good | Very good |
| Example 8 | A-4 | 100 | 1.0 | C-1 | 1.0 | 0.005 | 0.1 | 31 | 7 | 35 | 1 | Very good | Very good |
| Comparative Example 5 | A'-1 | 100 | 1.5 | C-2 | 1.0 | 0.005 | 0.1 | 31 | 22 | 37 | 22 | Bad | Very good |

The above results show that the adhesive layers (adhesive tapes) of Examples 5 to 8 containing a specific amount or more of the structural unit derived from aliphatic dicarboxylic acids (a1) having 4 or less carbon atoms as the structural unit derived from polycarboxylic acids (a) are excellent in adhesive strength to the adherend, easy moisture-heat peelability, and holding strength, and are highly effective in reducing environmental impact because of high biomass degree and excellent recyclability.

On the other hand, the adhesive layer (adhesive tape) of Comparative Example 5 that does not contain the structural unit derived from aliphatic dicarboxylic acids (a1) having 4 or less carbon atoms was inferior in easy moisture-heat peelability and had poor recyclability compared with the adhesive layers of the examples.

The resins obtained in Comparative Examples 3 and 4 were not soluble in a solvent, so various evaluations for adhesive compositions could not be performed.

While specific forms of the embodiments of the present disclosure have been shown in the above examples, the examples are merely illustrative and should not be interpreted in a limited sense. It is contemplated that various modifications evident to those skilled in the art could be made without departing from the scope of the present disclosure.

INDUSTRIAL APPLICABILITY

The polyester of the present disclosure is used in an adhesive composition that can form an adhesive layer that has excellent adhesive strength to various adherends even though it is a thin film, and is highly effective in reducing environmental impact because of excellent biomass degree, recyclability, and biodegradability. The adhesive composition is suitable for single-sided or double-sided adhesive tapes for bonding optical components, adhesive tapes for electronic components for fixing components of portable electronic terminals and for fixing electronic components, and adhesive layers of these single-sided or double-sided adhesive tapes.

**Claims**

1. A polyester comprising a structural unit derived from polycarboxylic acids (a) and a structural unit derived from polyalcohols (b), wherein

   the polycarboxylic acids (a) comprise aliphatic polycarboxylic acids (a1) having 4 or less carbon atoms,
   a structural unit derived from the aliphatic polycarboxylic acids (a1) having 4 or less carbon atoms is in an amount of 50 moles or more in 100 moles of the structural unit derived from polycarboxylic acids (a), and
   the polyester has a crystal fusion heat of 30 J/g or less.

2. A polyester comprising a structural unit derived from polycarboxylic acids (a) and a structural unit derived from polyalcohols (b), wherein

   the polycarboxylic acids (a) comprise aliphatic polycarboxylic acids (a1) having 4 or less carbon atoms,
   a structural unit derived from the aliphatic polycarboxylic acids (a1) having 4 or less carbon atoms is in an amount of 50 moles or more in 100 moles of the structural unit derived from polycarboxylic acids (a),
   a structural unit derived from 1,4-butanediol is in an amount of less than 50 moles in 100 moles of the structural unit derived from polyalcohols (b).

3. The polyester according to claim 1 or 2, wherein the aliphatic polycarboxylic acids (a1) having 4 or less carbon atoms comprise a structural unit derived from succinic acid.

4. The polyester according to claim 1 or 2, wherein the polyalcohols (b) comprise linear aliphatic polyalcohols (b1) having an odd number of carbon atoms.

5. The polyester according to claim 1 or 2, wherein the polyalcohols (b) comprise linear aliphatic polyalcohols (b1) having an odd number of carbon atoms, and the linear aliphatic polyalcohols (b1) having an odd number of carbon atoms is contained in an amount of 10 moles or more in 100 moles of the structural unit derived from polyalcohols (b).

6. The polyester according to claim 1 or 2, wherein the polyalcohols (b) comprise linear aliphatic polyalcohols (b1) having an odd number of carbon atoms, and the linear aliphatic polyalcohols (b1) having an odd number of carbon atoms comprise a structural unit derived from at least one selected from the group consisting of 1,3-propanediol, 1,5-pentanediol, 1,7-heptanediol, and 1,9-nonanediol.

7. The polyester according to claim 1 or 2, wherein the polyalcohols (b) comprise side-chain aliphatic diols (b2) having a hydrocarbon group in a side chain.

8. The polyester according to claim 1 or 2, wherein the polyalcohols (b) comprise linear aliphatic polyalcohols (b1) of polyalcohols having an odd number of carbon atoms and side-chain aliphatic diols (b2) having a hydrocarbon group in a side chain, and a molar ratio (b1)/(b2) of the linear aliphatic polyalcohols (b1) of polyalcohols having an odd number of carbon atoms to the side-chain aliphatic diols (b2) having a hydrocarbon group in a side chain is 0.5 to 10.0.

9. The polyester according to claim 1 or 2, wherein the polyester has an ester bond concentration of 11 to 14 mmol/g.

10. The polyester according to claim 1 or 2, wherein the polyester has a biomass degree of 30% or more.

11. An adhesive composition comprising the polyester according to claim 1 or 2.

12. An adhesive composition, wherein the adhesive composition according to claim 11 has a hydrolysis suppressor, and the hydrolysis suppressor is a monocarbodiimide compound.

13. An adhesive, wherein the adhesive composition according to claim 11 has a crosslinker, the adhesive is made by crosslinking by the crosslinker, and the adhesive has a gel fraction of 5 to 60%.

14. An adhesive tape comprising the adhesive according to claim 13.

15. An adhesive tape for electronic components, comprising the adhesive according to claim 13.

16. An adhesive composition comprising a polyester having a structural unit derived from polycarboxylic acids (a) and a structural unit derived from polyalcohols (b), wherein

the polycarboxylic acids (a) comprise aliphatic polycarboxylic acids (a1) having 4 or less carbon atoms, and a structural unit derived from the aliphatic polycarboxylic acids (a1) having 4 or less carbon atoms is in an amount of 50 moles or more in 100 moles of the structural unit derived from polycarboxylic acids (a).

## INTERNATIONAL SEARCH REPORT

International application No.

**PCT/JP2024/007004**

### A. CLASSIFICATION OF SUBJECT MATTER

*C08G 63/00*(2006.01)i; *C09J 7/38*(2018.01)i; *C09J 11/06*(2006.01)i; *C09J 167/02*(2006.01)i
FI: C08G63/00; C09J11/06; C09J7/38; C09J167/02

According to International Patent Classification (IPC) or to both national classification and IPC

### B. FIELDS SEARCHED

Minimum documentation searched (classification system followed by classification symbols)

C08G63/00; C09J7/38; C09J11/06; C09J167/02

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2015-038162 A (NIPPON BEE CHEMICAL CO., LTD.) 26 February 2015 (2015-02-26) claims, examples | 1-16 |
| X | JP 2008-501048 A (BASF AKTIENGESELLSCHAFT) 17 January 2008 (2008-01-17) claims, examples | 1-3, 9, 11-16 |
| A | | 4-8, 10 |
| X | JP 2011-516670 A (LAPOL, LLC) 26 May 2011 (2011-05-26) claims, examples | 1-3, 9, 11-16 |
| A | | 4-8, 10 |
| X | JP 2009-067918 A (SHOWA HIGHPOLYMER CO., LTD.) 02 April 2009 (2009-04-02) claims, examples | 1-3, 9, 11-16 |
| A | | 4-8, 10 |

☑ Further documents are listed in the continuation of Box C. ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **10 April 2024** | **23 April 2024** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (July 2022)

**INTERNATIONAL SEARCH REPORT**

| International application No. |
|---|
| **PCT/JP2024/007004** |

| C. | DOCUMENTS CONSIDERED TO BE RELEVANT | |
|---|---|---|
| Category* | Citation of document, with indication, where appropriate, of the relevant passages | Relevant to claim No. |
| X | JP 2012-507593 A (EASTMAN CHEMICAL COMPANY) 29 March 2012 (2012-03-29)<br>claims, examples | 16 |
| A | | 1-15 |

Form PCT/ISA/210 (second sheet) (July 2022)

### INTERNATIONAL SEARCH REPORT
#### Information on patent family members

International application No.

**PCT/JP2024/007004**

| Patent document cited in search report | | | Publication date (day/month/year) | Patent family member(s) | | | Publication date (day/month/year) |
|---|---|---|---|---|---|---|---|
| JP | 2015-038162 | A | 26 February 2015 | US | 2011/0257273 | A1 | |
| | | | | claims, examples | | | |
| | | | | CN | 102234369 | A | |
| | | | | JP | 2012-067303 | A | |
| | | | | JP | 2012-067304 | A | |
| JP | 2008-501048 | A | 17 January 2008 | US | 2007/0213501 | A1 | |
| | | | | claims, examples | | | |
| | | | | WO | 2005/118677 | A1 | |
| | | | | EP | 1756197 | A1 | |
| | | | | DE | 102004026904 | A | |
| | | | | CA | 2563710 | A1 | |
| | | | | BR | PI0511586 | A | |
| | | | | AU | 2005250107 | A | |
| | | | | AT | 465202 | T | |
| | | | | ES | 2343422 | T | |
| | | | | MX | PA06013508 | A | |
| | | | | KR | 10-2007-0034533 | A | |
| | | | | ZA | 200610809 | B | |
| JP | 2011-516670 | A | 26 May 2011 | US | 2009/0253871 | A1 | |
| | | | | claims, examples | | | |
| | | | | WO | 2009/146109 | A1 | |
| | | | | EP | 2265662 | A1 | |
| | | | | CN | 102046694 | A | |
| | | | | TW | 201000516 | A | |
| | | | | BR | PI0911331 | A | |
| JP | 2009-067918 | A | 02 April 2009 | (Family: none) | | | |
| JP | 2012-507593 | A | 29 March 2012 | US | 2010/0112250 | A1 | |
| | | | | claims, examples | | | |
| | | | | WO | 2010/056270 | A1 | |
| | | | | EP | 2344603 | A1 | |
| | | | | JP | 2012-507594 | A | |

Form PCT/ISA/210 (patent family annex) (July 2022)

## REFERENCES CITED IN THE DESCRIPTION

**Patent documents cited in the description**

- JP 2007169327 A
- JP 2007099879 A

- JP 2022079443 A

**Non-patent literature cited in the description**

- A Speciation of Bio-Fuel by Easy C-14 Measurement. *Tokyo Metropolitan Industrial Technology Research Institute Research Report*, 2009 (4)